# EUROPEAN PATENT APPLICATION

(11) **EP 3 636 332 A1**
(43) Date of publication of application: **15.04.2020**
(21) Application number: 19202137.6
(22) Date of filing: 09.10.2019
(51) Int. Cl.: B01D 29/13, B01D 29/96, B01D 35/30

(54) **KEY STRUCTURE FOR INSTALLING A FILTER CARTRIDGE ON A CYLINDER AND RELATED FILTER DEVICE**

(30) Priority: 12.10.2018 TW 107135984
(71) Applicant: Bright Sheland International Co., Ltd., Douliou City, Yunlin County 640 (TW)
(72) Inventor: Ho, Chao-Chuan, 106 Taipei City (TW)
(74) Representative: Straus, Alexander

(57) **Abstract**

A key structure (13) includes a main body (131) and a resilient arm (132). The main body (131) extends along a horizontal direction (H) and includes a combining portion (1311) for combination with a filter cartridge (12). The resilient arm (132) is connected to the main body (131) and extends along a vertical direction (V) substantially perpendicular to the horizontal direction (H) downwardly. An engaging hook (1321) is formed on an end of the resilient arm (132) for engaging with a positioning recess (1121) on the cylinder (112). Therefore, the filter cartridge (12) can be installed on the cylinder (112) easily by engagement of the engaging hook (1321) and the positioning recess (1121).

## Description

### Field of the Invention

The present invention relates to a key structure and a filter device according to the pre-characterizing clauses of claims 1 and 8.

### Background of the Invention

With advancement of filtering technology and development of filter material, filter devices are widely used in different fields. The filter device usually includes a filter shell and a filter cartridge. The filter shell has a suction port and a discharging port for connection with pipelines. The filter cartridge is disposed in the filter shell for removing specific substances from process fluid, waste water or drinking water, so as to achieve a purpose of filtration. However, pores of the filter cartridge may be obstructed gradually with increase in use, which not only brings a negative effect on a filtering efficiency of the filter device but also increases a pressure difference of the filter device. In order to maintain the filtering efficiency of the filter device and prevent the excessive pressure difference of the filter device, the filter cartridge has to be replaced periodically. Besides, when a user replaces the filter cartridge, the user may contact residual substances on the filter cartridge, which may cause a potential hazard. Therefore, it becomes an important topic in the field to allow a user to replace a filter cartridge safely and easily.

### Summary of the Invention

This is mind, the present invention aims at providing a key structure for easy assembly of a filter cartridge, and a filter device therewith.

This is achieved by a key structure and a filter device according to claims 1 and 8. The dependent claims pertain to corresponding further developments and improvements.

As will be seen more clearly from the detail description following below, the claimed key structure for installing a filter cartridge on a cylinder includes a main body and a resilient arm. The main body extends along a horizontal direction and includes a combining portion for being combined with the filter cartridge. The resilient arm is connected to the main body and extends along a vertical direction substantially perpendicular to the horizontal direction downwardly. An engaging hook is formed on an end of the resilient arm for engaging with a positioning recess on the cylinder.

According to an embodiment of the present invention, the key structure further includes at least one fixing lug connected to the main body and extending along the vertical direction downwardly. An abutting portion is formed on the at least one fixing lug and extends along the horizontal direction, and the abutting portion abuts against a protruding rim on an end surface of the cylinder when the engaging hook engages with the positioning recess.

According to an embodiment of the present invention, the key structure further includes at least one operating rib connected to the main body and extending along the vertical direction upwardly, and the at least one operating rib drives the main body to rotate relative to the cylinder when the at least one operating rib is operated.

According to an embodiment of the present invention, the key structure further includes at least one strengthening rib disposed on the main body for strengthening a structural strength of the key structure.

According to an embodiment of the present invention, the combining portion is detachably combined with a neck portion on an end cap of the filter cartridge. Two engaging protrusions protrude from two sides of the combining portion and are located at positions respectively corresponding to two engaging recesses on a wall of the neck portion, and the two engaging protrusions respectively engage with the two engaging recesses when the combining portion is combined with the neck portion.

According to an embodiment of the present invention, a shape of a cross section of the combining portion along the horizontal direction matches with a shape of a cross section of the neck portion along the horizontal direction.

According to an embodiment of the present invention, a shape of a cross section of the combining portion along the horizontal direction does not match with a shape of a cross section of the neck portion along the horizontal direction.

Besides, the claimed filter device includes a shell, a filter cartridge and a key structure. The shell includes a cover and a cylinder. The cover is detachably combined with the cylinder. An accommodating space is enclosed by the cover and the cylinder. A positioning recess is formed on the cylinder. The filter cartridge is disposed in the accommodating space. The key structure is for installing the filter cartridge on the cylinder. The key structure includes a main body and a resilient arm. The main body extends along a horizontal direction and includes a combining portion for being combined with the filter cartridge. The resilient arm is connected to the main body and extends along a vertical direction substantially perpendicular to the horizontal direction downwardly. An engaging hook is formed on an end of the resilient arm for engaging with the positioning recess.

According to an embodiment of the present invention, the cylinder includes at least one guiding structure disposed on at least one side of the positioning recess for guiding the engaging hook to enter into the positioning recess.

According to an embodiment of the present invention, the key structure further includes at least one fixing lug connected to the main body and extending along the vertical direction downwardly. An abutting portion is formed on the at least one fixing lug and extends along the horizontal direction. A protruding rim is formed on an end surface of the cylinder, and the abutting portion abuts against the protruding rim when the engaging hook engages with the positioning recess.

According to an embodiment of the present invention, the filter cartridge includes a cartridge body and an end cap installed on the cartridge body. A neck portion is formed on the end cap. The combining portion is detachably combined with the neck portion. Two engaging recesses are formed on a wall of the neck portion. Two engaging protrusions protrude from two sides of the combining portion and are located at positions respectively corresponding to the two engaging recesses, and the two engaging protrusions respectively engage with the two engaging recesses when the combining portion is combined with the neck portion.

In summary, the key structure of the present invention utilizes the combining portion to be combined with the filter cartridge and further utilizes the engaging hook to engage with the positioning recess on the cylinder. Therefore, when it is desired to install the filter cartridge on the cylinder, it only has to combine the combining portion with the filter cartridge and then operate the key structure to engage the engaging hook with the positioning recess on the cylinder, which achieves assembly of the filter cartridge. Furthermore, the filter cartridge and the cylinder can be detached together when the cylinder is detached from the cover, which saves maintenance space in order for replacement of the filter cartridge. Besides, when it is desired to detach the filter cartridge from the cylinder, it only has to operate the key structure to disengage the engaging hook from the positioning recess on the cylinder for allowing detachment of the filter cartridge and the key structure together from the cylinder. Therefore, the key structure of the present invention has advantages of simple structure, saving the maintenance space in order for replacement of the filter cartridge, and easy operation. In addition, during the aforementioned detaching process, the user only contacts the key structure rather than the filter cartridge, which effectively prevents a potential hazard caused by contacting residual substances on the filter cartridge.

These and other objectives of the present invention will no doubt become obvious to those of ordinary skill in the art after reading the following detailed description of the preferred embodiment that is illustrated in the various figures and drawings.

### Brief Description of the Drawings

In the following, the invention is further illustrated by way of example, taking reference to the accompanying drawings. Thereof
FIG. 1 is a schematic diagram of a filter device according to an embodiment of the present invention,
FIG. 2 and FIG. 3 are exploded diagrams of the filter device according to the embodiment of the present invention,
FIG. 4 is a diagram of a cylinder according to the embodiment of the present invention,
FIG. 5 and FIG. 6 are diagrams of the key structure and the filter cartridge at different views according to the embodiment of the present invention,
FIG. 7 to FIG. 9 are diagrams of the filter device in a first state at different views according to the embodiment of the present invention, and
FIG. 10 to FIG. 12 are diagrams of the filter device in a second state at different views according to the embodiment of the present invention.

### Detailed Description

In the following detailed description of the preferred embodiments, reference is made to the accompanying drawings which form a part hereof, and in which is shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. Accordingly, the drawings and descriptions will be regarded as illustrative in nature and not as restrictive.

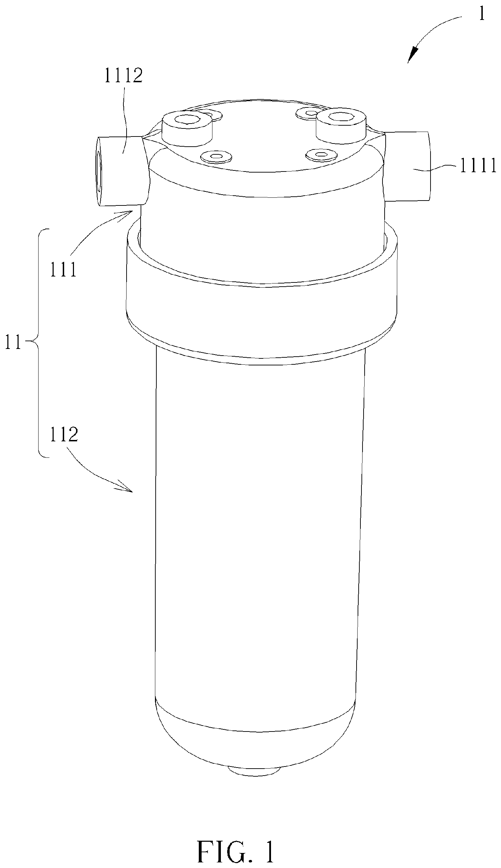

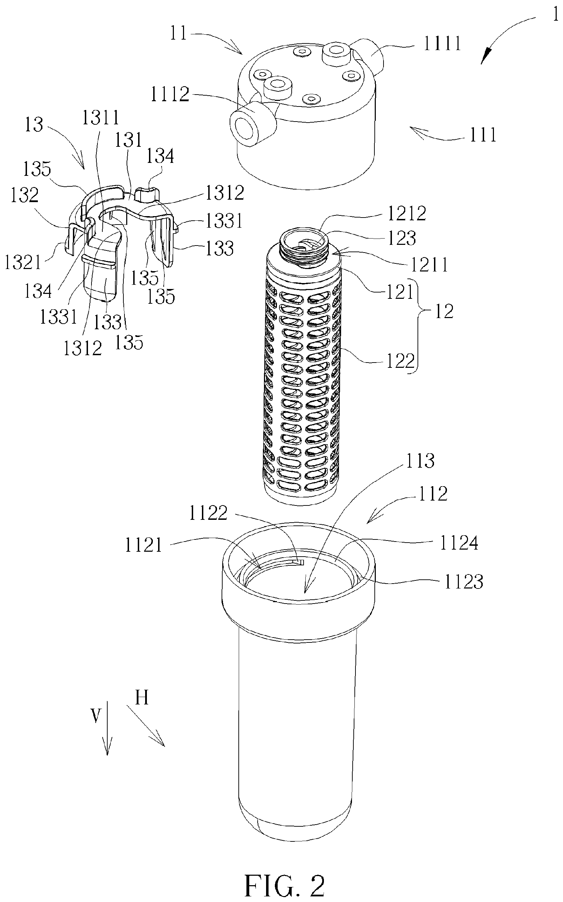

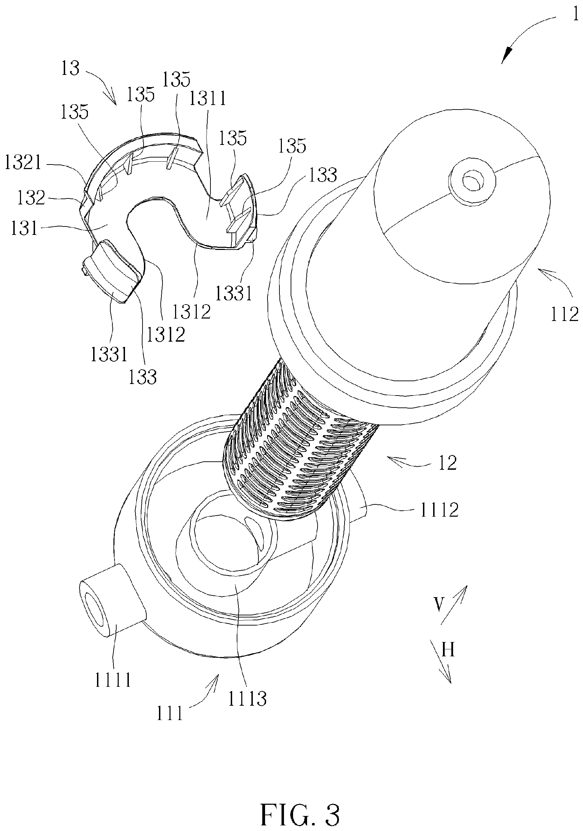

Please refer to FIG. 1 to FIG. 3. FIG. 1 is a schematic diagram of a filter device 1 according to an embodiment of the present invention. FIG. 2 and FIG. 3 are exploded diagrams of the filter device 1 according to the embodiment of the present invention. As shown in FIG. 1 to FIG. 3, the filter device 1 includes a shell 11, a filter cartridge 12 and a key structure 13. The shell 11 includes a cover 111 and a cylinder 112. The cover 111 and the cylinder 112 are detachably combined with each other. An accommodating space 113 is enclosed by the cover 111 and the cylinder 112. The filter cartridge 12 is installed on the cylinder 112 and located in the accommodating space 113. The cover 111 includes a suction port 1111, a discharging port 1112 and a communicating portion 1113. The suction port 1111 is communicated with the accommodating space 113 and for connection with an upstream pipeline, which is not shown in the figures. The communicating portion 1113 is located in the accommodating space 113 and for connection with the filter cartridge 12. The discharging port 1112 is communicated with the communicating portion 1113 and for connection with a downstream pipeline, which is not shown in the figures. In such a way, when the upstream pipeline and the downstream pipeline are respectively connected to the suction port 1111 and the discharging portion 1112, fluid can flow from the suction port 1111 into the accommodating space 113 and then flow through the filter cartridge 12, so as to be filtered by the filter cartridge 12. Afterwards, the fluid can flow through the communicating portion 1113 and the discharging port 1112 to the downstream pipeline, which achieves a purpose of filtering the fluid.

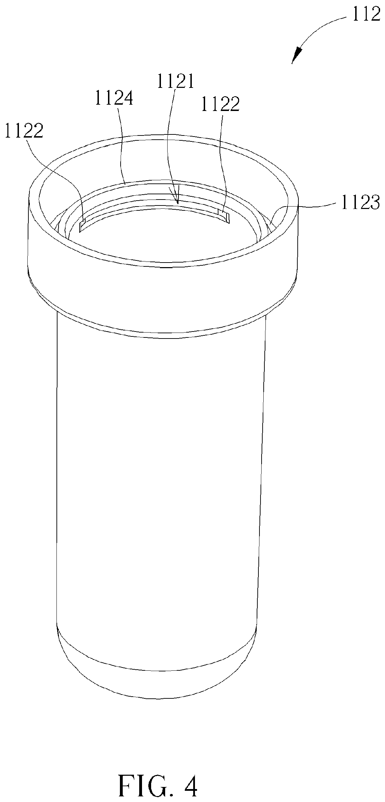

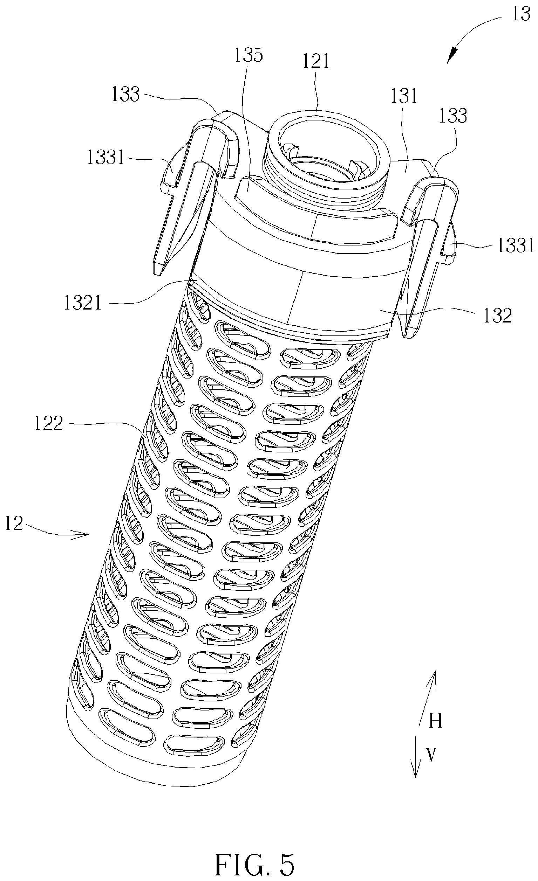

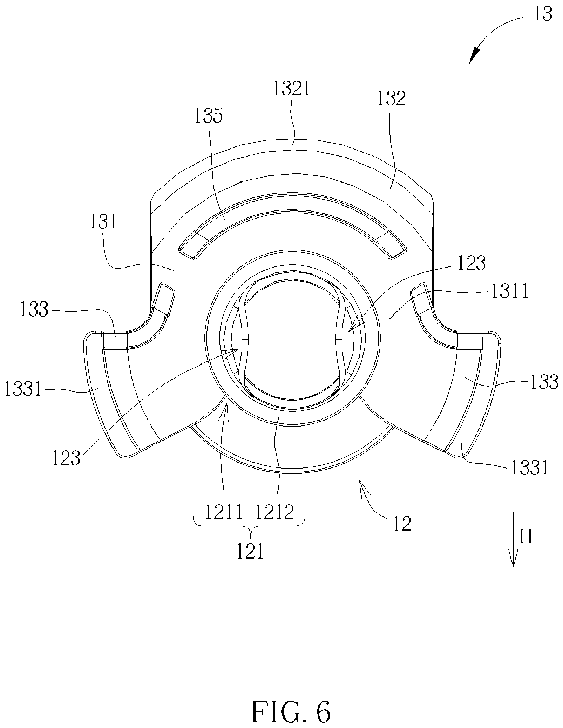

Specifically, please refer to FIG. 2 to FIG. 6. FIG. 4 is a diagram of the cylinder 112 according to the embodiment of the present invention. FIG. 5 and FIG. 6 are diagrams of the key structure 13 and the filter cartridge 12 at different views according to the embodiment of the present invention. As shown in FIG. 2 to FIG. 6, the key structure 13 includes a main body 131, a resilient arm 132, two fixing lugs 133, two operating ribs 134 and eight strengthening ribs 135. The main body 131 extends along a horizontal direction H and includes a combining portion 1311 for combination with the filter cartridge 12. The filter cartridge 12 includes an end cap 121 and a cartridge body 122. The end cap 121 is installed on the cartridge body 122. A neck portion 1211 and a connecting portion 1212 are formed on the end cap 121. The connecting portion 1212 is for being connected to the communicating portion 1113. The neck portion 1211 is for being detachably combined with the combining portion 1311.

Specifically, two engaging recesses 123 are formed on a wall of the neck portion 1211. Two engaging protrusions 1312 protrude from two sides of the combining portion 1311 and are located at positions respectively corresponding to the two engaging recesses 123 on the neck portion 1211. When the combining portion 1311 is detachably combined with the neck portion 1211, the two engaging protrusions 1312 respectively engage with the two engaging recesses 123, so that the key structure 13 and the filter cartridge 12 can be firmly engaged with each other by engagement of the two engaging protrusions 1312 and the two engaging recesses 123. Preferably, in this embodiment, a shape of a cross section of the combining portion 1311 along the horizontal direction H and a shape of a cross section of the neck portion 1211 along the horizontal direction H can match with each other and be formed in gourd shapes. In detailed, an opening end of the combining portion 1311 can be narrower than a closed end of the combining portion 1311, which makes the combining portion 1311 engage with the neck portion 1211 more firmly. However, the present invention is not limited to this embodiment. The shape of the cross section of the combining portion 1311 along the horizontal direction H does not have to match with the shape of the cross section of the neck portion 1211 along the horizontal direction H. For example, in another embodiment, the cross section of the neck portion 1211 can be formed in a dog-bone shape, and the cross section of the combining portion 1311 can be formed in a gourd shape, which does not match with the dog-bone shape.

Furthermore, the resilient arm 132 is connected to the main body 131 and extends along a vertical direction V substantially perpendicular to the horizontal direction H downwardly. An engaging hook 1321 is formed on an end of the resilient arm 132. A positioning recess 1121 is formed on the cylinder 112. After the key structure 13 is combined with the filter cartridge 12, the filter cartridge 12 and the key structure 13 can be placed into the cylinder 112 together. When the filter cartridge 12 and the key structure 13 are placed into the cylinder 112 together, the engaging hook 1321 can stretch into the cylinder 112 downwardly to engage with the positioning recess 1121 for achieving assembly and positioning of the key structure 13 relative to the cylinder 112. In this embodiment, the cylinder 112 preferably can include two guiding structures 1122. The two guiding structures 1122 are disposed on two sides of the positioning recess 1121 for guiding the engaging hook 1321 to enter into or leave from the positioning recess 1121. The two fixing lugs 133 are connected to the main body 131 and extend along the vertical direction V downwardly. The two fixing lugs 133 are located on two sides of the resilient arm 132. An abutting portion 1331 is formed on each fixing lug 133 and extends along the horizontal direction H for abutting against a protruding rim 1124 on an end surface 1123 of the cylinder 112 when the engaging hook 1321 engages with the positioning recess 1121. The engaging hook 1321 and the two abutting portions 1331 can form three-point support for achieving assembling stability of the key structure 13 relative to the cylinder 112. However, the numbers and the configurations of the positioning recess 1121, the resilient arm 132, the engaging hook 1321, the fixing lug 133 and the abutting portion 1331 are not limited to those illustrated in the figures of this embodiment. It depends on practical demands.

Furthermore, the two operating ribs 134 are connected to the main body 131 and extend along the vertical direction V upwardly for allowing a user to operate the two operating ribs 134 to drive the main body 131 to rotate relative to the cylinder 112, so as to drive the engaging hook 132 to rotatably engage with or disengage from the positioning recess 1221, which achieves assembly or disassembly of the key structure 13. The eight strengthening ribs 135 are respectively disposed on the main body 131, a connection of the main body 131 and the resilient arm 132 and a connection of the main body 131 and each fixing lug 133, for strengthening a structural strength of the key structure 13. However, the number, the size, and the configuration of the strengthening rib 135 are not limited to those illustrated in the figures of this embodiment. It depends on practical demands.

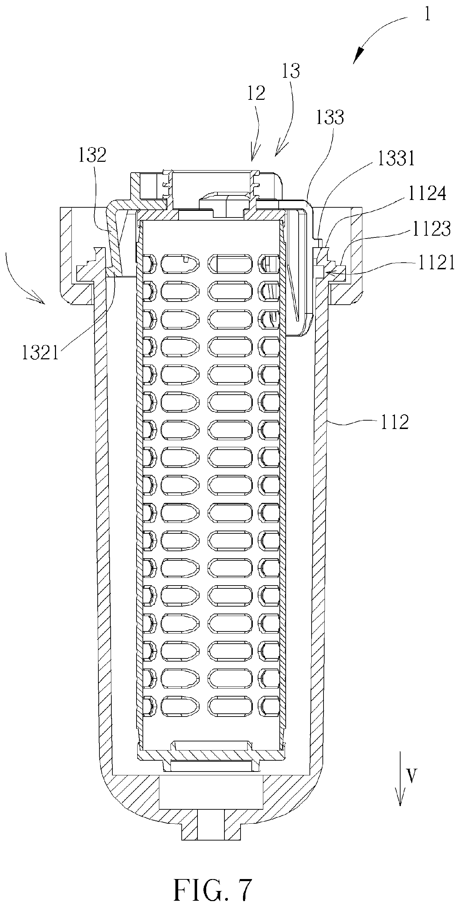

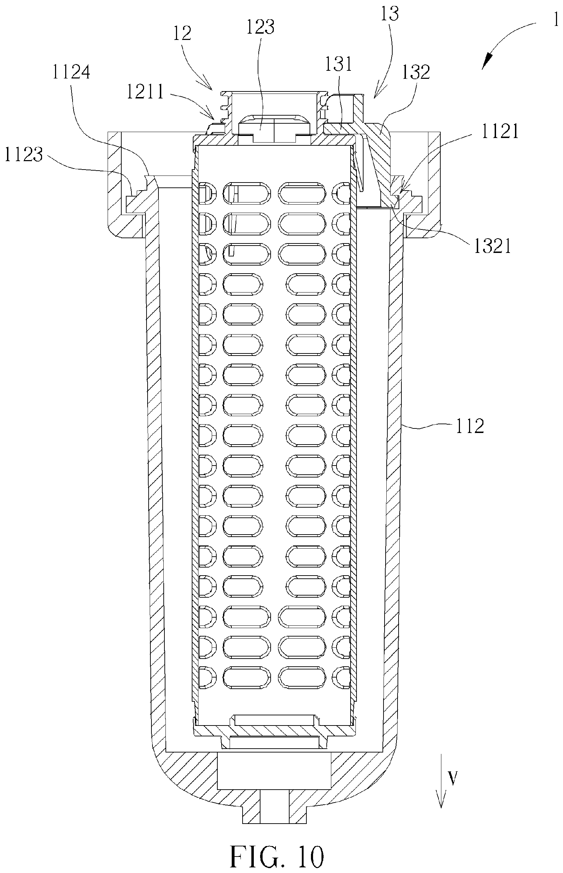

Please refer to FIG. 2 to FIG. 3 and FIG. 7 to FIG. 12. FIG. 7 to FIG. 9 are diagrams of the filter device 1 in a first state at different views according to the embodiment of the present invention. FIG. 10 to FIG. 12 are diagrams of the filter device 1 in a second state at different views according to the embodiment of the present invention. As shown in FIG. 2 and FIG. 3, when it is desired to assemble the filter device 1, the cylinder 112 can be detached from the cover 111. Afterwards, the combining portion 1311 of the main body 131 of the key structure 13 can be combined with the neck portion 1211 of the filter cartridge 12 for achieving assembly of the key structure 13 and the filter cartridge 12. Furthermore, as shown in FIG. 7, the assembly of the key structure 13 and the filter cartridge 12 can be placed into the cylinder 112 until the abutting portions 1331 abut against the protruding rim 1124 on the end surface 1123 of the cylinder 112. It should be noticed that during the aforementioned process, an inner wall of the cylinder 112 interferes with the engaging hook 1321, so that the resilient arm 132 is forced to resiliently deform inwardly.

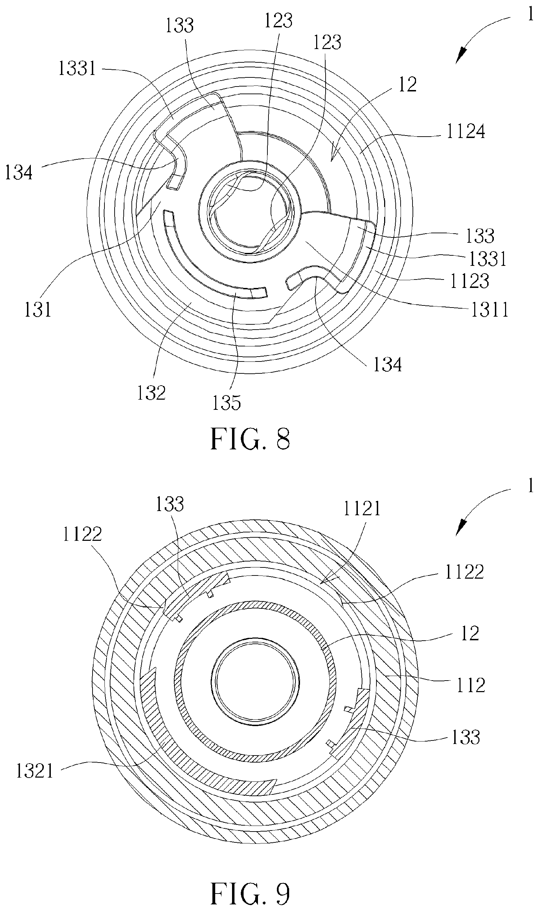

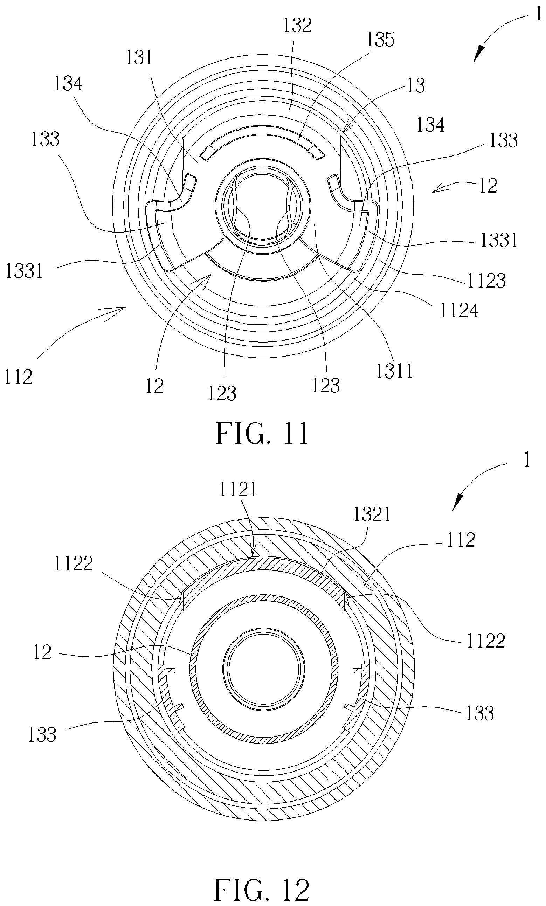

Besides, when the abutting portions 1331 abut against the protruding rim 1124, the engaging hook 1321 and the positioning recess 1121 are located on the same height or level. At this moment, if the engaging hook 1321 is misaligned with the positioning recess 1121, as shown in FIG. 9, the user can operate the two operating ribs 134 to drive the key structure 13 and the filter cartridge 12 together to rotate relative to the cylinder 112 from a position as shown in FIG. 8 to a position as shown in FIG. 11, so that the engaging hook 1321 can pass over the guiding structure 1122 to be aligned with the positioning recess 1121, which allows the engaging hook 1321 to be driven by a recovering force of the resiliently deformed resilient arm 132 to engage with the positioning recess 1121, as shown in FIG. 12, for achieving a purpose of installing the filter cartridge 12 on the cylinder 112 by the key structure 13. Afterwards, the user can attach the cover 111 onto the cylinder 112 where the filter cartridge 12 is installed, so as to achieve assembly of the filter device 1. However, it is not limited to this embodiment. For example, if the engaging hook 1321 is aligned with the positioning recess 1121 in a condition that the abutting portions 1331 abut against the protruding rim 1124, it is not required to operate the operating ribs 134 to drive the main body 131 and the engaging hook 1321 connected to the main body 131 to rotate. The resiliently deformed resilient arm 132 can resiliently recover to drive the engaging hook 1321 to engage with the positioning recess 1121 for achieving assembly and positioning of the key structure 13 relative to the cylinder 112.

When it is desired to replace the filter cartridge 12 after a period of time of usage, the user can detach the cylinder 112 from the cover 111 because the filter cartridge 12 is installed on the cylinder 112 by the key structure 13. At this moment, the filter cartridge 12 can be detached along with detachment of the cylinder 112 instead of being attached on the cover 111. Therefore, during the detachment of the cylinder 112 from the cover 111, it is not required to disassemble the cylinder 112 downwardly to expose the whole filter cartridge 12, which saves maintenance space in order for replacement of the filter cartridge 12. Afterwards, the user can operate the two operating ribs 134 to drive the key structure 13 and the filter cartridge 12 together to rotate relative to the cylinder 112, so that the engaging hook 1321 can pass over the guiding structure 1122 to disengage from the positioning recess 1121. During disengagement of the engaging hook 1321 from the positioning recess 1121, the resilient arm 132 can be resiliently deformed by interference of the engaging hook 1321 and the inner wall of the cylinder 112. Therefore, when the engaging hook 1321 disengages from the positioning recess 1121, the user can detach the key structure 13 and the filter cartridge 12 together from the cylinder 112 easily. It should be noticed that during the aforementioned detachment of the key structure 13 and the filter cartridge 12, it can protect the user from contacting the filter cartridge 12 directly. Therefore, the present invention can prevent a potential hazard caused by contacting residual substances on the filter cartridge 12. The key structure 13 can be replaced with replacement of the cartridge filter 12. In other words, after the detachment of the used key structure 13 and the used filter cartridge 12, it is not necessary to detach the used key structure 13 from the used filter cartridge 12. Instead, a new key structure can be combined with a new filter cartridge for replacing the old assembly of the used key structure 13 and the used filter cartridge 12, for preventing the potential hazard caused by contacting residual substances on the used filter cartridge 12 or the key structure 13.

In contrast to the prior art, the key structure of the present invention utilizes the combining portion to be combined with the filter cartridge and further utilizes the engaging hook to engage with the positioning recess on the cylinder. Therefore, when it is desired to install the filter cartridge on the cylinder, it only has to combine the combining portion with the filter cartridge and then operate the key structure to engage the engaging hook with the positioning recess on the cylinder, which achieves assembly of the filter cartridge. Furthermore, the filter cartridge and the cylinder can be detached together when the cylinder is detached from the cover, which saves maintenance space in order for replacement of the filter cartridge. Besides, when it is desired to detach the filter cartridge from the cylinder, it only has to operate the key structure to disengage the engaging hook from the positioning recess on the cylinder for allowing detachment of the filter cartridge and the key structure together from the cylinder. Therefore, the key structure of the present invention has advantages of simple structure, saving the maintenance space in order for replacement of the filter cartridge, and easy operation. In addition, during the aforementioned detaching process, the user only contacts the key structure rather than the filter cartridge, which effectively prevents a potential hazard caused by contacting residual substances on the filter cartridge.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A key structure (13) for installing a filter cartridge (12) on a cylinder (112), **characterized in that** the key structure (13) comprises:
a main body (131) extending along a horizontal direction (H) and comprising a combining portion (1311) for being combined with the filter cartridge (12); and
a resilient arm (132) connected to the main body (131) and extending along a vertical direction (V) substantially perpendicular to the horizontal direction (H) downwardly, an engaging hook (1321) being formed on an end of the resilient arm (132) for engaging with a positioning recess (1121) on the cylinder (112).

2. The key structure (13) of claim 1, further **characterized by** at least one fixing lug (133) connected to the main body (131) and extending along the vertical direction (V) downwardly, an abutting portion (1331) being formed on the at least one fixing lug (133) and extending along the horizontal direction (H), and the abutting portion (1331) abutting against a protruding rim (1124) on an end surface (1123) of the cylinder (112) when the engaging hook (1321) engages with the positioning recess (1121).

3. The key structure (13) of any one of claims 1 and 2, further **characterized by** at least one operating rib (134) connected to the main body (131) and extending along the vertical direction (V) upwardly, and the at least one operating rib (134) driving the main body (131) to rotate relative to the cylinder (112) when the at least one operating rib (134) is operated.

4. The key structure (13) of any one of claims 1 to 3, further **characterized by** at least one strengthening rib (135) disposed on the main body (131) for strengthening a structural strength of the key structure (13).

5. The key structure (13) of any one of claims 1 to 4, **characterized in that** the combining portion (1311) is detachably combined with a neck portion (1211) on an end cap (121) of the filter cartridge (12), two engaging protrusions (1312) protrude from two sides of the combining portion (1311) and are located at positions respectively corresponding to two engaging recesses (123) on a wall of the neck portion (1211), and the two engaging protrusions (1312) respectively engage with the two engaging recesses (123) when the combining portion (1311) is combined with the neck portion (1211).

6. The key structure (13) of claim 5, **characterized in that** a shape of a cross section of the combining portion (1311) along the horizontal direction (H) matches with a shape of a cross section of the neck portion (1211) along the horizontal direction (H).

7. The key structure (13) of claim 5, **characterized in that** a shape of a cross section of the combining portion (1311) along the horizontal direction (H) does not match with a shape of a cross section of the neck portion (1211) along the horizontal direction (H).

8. A filter device (1) comprising:
a shell (11) comprising a cover (111) and a cylinder (112), the cover (111) being detachably combined with the cylinder (112), an accommodating space (113) being enclosed by the cover (111) and the cylinder (112), a positioning recess (1121) being formed on the cylinder (112); and
a filter cartridge (12) disposed in the accommodating space (113);
**characterized in that** the filter device (1) further comprises:
a key structure (13) for installing the filter cartridge (12) on the cylinder (112), the key structure (13) comprising:
a main body (131) extending along a horizontal direction (H) and comprising a combining portion (1311) for being combined with the filter cartridge (12); and
a resilient arm (132) connected to the main body (131) and extending along a vertical direction (V) substantially perpendicular to the horizontal direction (H) downwardly, an engaging hook (1321) being formed on an end of the resilient arm (132) for engaging with the positioning recess (1121).

9. The filter device (1) of claim 8, **characterized in that** the cylinder (112) comprises at least one guiding structure (1122) disposed on at least one side of the positioning recess (1121) for guiding the engaging hook (1321) to enter into the positioning recess (1121).

10. The filter device (1) of any one of claims 8 and 9, **characterized in that** the key structure (13) further comprises at least one fixing lug (133) connected to the main body (131) and extending along the vertical direction (V) downwardly, an abutting portion (1331) is formed on the at least one fixing lug (133) and extends along the horizontal direction (H), a protruding rim (1124) is formed on an end surface (1123) of the cylinder (112), and the abutting portion (1331) abuts against the protruding rim (1124) when the engaging hook (1321) engages with the positioning recess (1121).

11. The filter device (1) of any one of claims 8 to 10, **characterized in that** the key structure (13) further comprises at least one operating rib (134) connected to the main body (131) and extending along the vertical direction (V) upwardly, and the at least one operating rib (134) drives the main body (131) to rotate relative to the cylinder (112) when the at least one operating rib (134) is operated.

12. The filter device (1) of any one of claims 8 to 11, **characterized in that** the key structure (13) further comprises at least one strengthening rib (135) disposed on the main body (131) for strengthening a structural strength of the key structure (13).

13. The filter device (1) of any one of claims 8 to 12, **characterized in that** the filter cartridge (12) comprises a cartridge body (122) and an end cap (121) installed on the cartridge body (122), a neck portion (1211) is formed on the end cap (121), the combining portion (1311) is detachably combined with the neck portion (1211), two engaging recesses (123) are formed on a wall of the neck portion (1211), two engaging protrusions (1312) protrude from two sides of the combining portion (1311) and are located at positions respectively corresponding to the two engaging recesses (123), and the two engaging protrusions (1312) respectively engage with the two engaging recesses (123) when the combining portion (1311) is combined with the neck portion (1211).

14. The filter device (1) of claim 13, **characterized in that** a shape of a cross section of the combining portion (1311) along the horizontal direction (H) matches with a shape of a cross section of the neck portion (1211) along the horizontal direction (H).

15. The filter device (1) of claim 13, **characterized in that** a shape of a cross section of the combining portion (1311) along the horizontal direction (H) does not match with a shape of a cross section of the neck portion (1211) along the horizontal direction (H).
